# EUROPEAN PATENT SPECIFICATION

(11) **EP 2 320 396 B1**
(45) Date of publication and mention of the grant of the patent: **11.11.2015**
(21) Application number: 10177505.4
(22) Date of filing: 17.09.2010
(51) Int. Cl.: G08B 5/36, G08B 7/06, G08B 17/10, H04N 7/18, G06F 17/50

(54) **Systems and methods to display smoke propagation in multiple floors**
Systeme und Verfahren zur Anzeige von Rauchausbreitung in mehreren Stockwerken
Systèmes et procédés pour afficher la propagation de la fumée dans plusieurs étages

(30) Priority: 28.10.2009 US 589735
(43) Date of publication of application: 11.05.2011
(73) Proprietor: Honeywell International Inc., Morristown, NJ 07962 (US)
(72) Inventor: Gu, Ji, Pudong New Area Shanghai 201203 (CN); Liu, Yusi, Pudong New Area Shanghai 201203 (CN); Plocher, Thomas A., Hugo, MN 55038 (US)
(74) Representative: Houghton, Mark Phillip

(56) References cited:
- WO-A2-2007/058745
- US-A1- 2007 107 371
- US-A1- 2007 132 756
- US-A1- 2008 248 450

## Description

### FIELD

The invention pertains to systems and methods to develop and present displays of the spread of smoke in multiple floor environments. More particularly, the invention pertains to such systems and methods which are directed to three dimensional building models.

### BACKGROUND

Structural fires cost the US economy more than $100 billion annually in property damage, fire department maintenance, and insurance premiums. Approximately 80 percent of fire deaths occur in homes. Trying to put out these fires costs 80 to 100 fire fighters their lives and 80,000 to 90,000 more are injured every year. Smoke and toxic gas inhalation cause the majority of fire fatalities. Flashover, occurs when flames erupt and rapidly fill a compartment. Despite fire codes and improved building designs, flashover and smoke spread are still major problems and require a more complete understanding of fire behavior.

Fire modeling and visualization tools can be used to overcome these problems, ultimately leading to the prevention of smoke and fire spread. The ability to visualize smoke and fire propagation in a 3D building model permits users to obtain the paths that smoke and fire is taking place. This ability generally provides the greatest benefits for the development of emergency procedures in emergency situations.

The visualization of smoke and fire propagation permits emergency planners to determine portions of structures that are generally more susceptible to fire and smoke damage, and to better develop evacuation routes that may be used in an emergency situation. In addition, the ability to visualize smoke and fire propagation may permit building managers to make informed decisions regarding the placement of certain infrastructure.

Currently, visualization of Smoke propagation in 3D building models may cause great cluttering and occlusion while complex building elements are visualized simultaneously with the smoke. Furthermore, if smoke propagates from a certain floor to its neighbor floor, the visualization may cause the user great troubles in identifying the smoke propagation path in each floor and prevent the indication of vertical propagation direction.

Moreover, since several consecutive floors are crowded with smoke, it may cause great trouble in indicating the association between smoke and floors. It would be even more difficult for users to identify a small area of interest when smoke propagates in.

Various prior art approaches are known. ANSYS Engineering Simulation Solution developed a fire and smoke propagation simulation system in atrium spaces. This system focuses on general trends of smoke propagation. Wire frame and semi-transparency are used as indicator of walls and floors of the building.

Daniel Madrzykowski, Glenn P. Forney and William D. Walton in Building and Fire Research Laboratory of National Institute of Standards and Technology created a system to evaluate a fire disaster occurred in a multi-floor building. This system utilizes mix rendering mode (solid and wireframe) to enable a clear visualization of smoke and fire propagating within two floors. (Daniel Madrzykowski, Glenn P. Forney, William D. Walton, Simulation of the Dynamics of a Fire in a Two-Story Duplex - Iowa, December 22, 1999)

Glenn P. Forney introduced a smoke visualization tool named Smokeview. This system used solid meshes to visualize building elements. Users are able to switch rendering mode of smoke propagation among mesh plane, realistic particles and color coding vectors. The tool gives users ability to choose the layer of interest by their own and provides clear information of interest.

Further information in relation to three-dimensional rendering of buildings can be found in US-A-2007/0132756 and WO-A-2007/058745.

### BRIEF DESCRIPTION OF THE DRAWINGS

Figs. 1 illustrates a slide bar to alternate visualization strength in connection with one method in accordance with the invention;
Fig. 2 illustrates a slide bar to balance visualization strength in connection with the one method;
Fig. 3 illustrates a smoke propagation display with selected visual strength of smoke and building elements;
Fig. 4 illustrates smoke propagation with different visual strength of smoke and building elements;
Fig. 5 illustrates smoke propagation with yet another combination of visual strength of smoke and building elements;
Fig. 6 illustrates a single group of clipping planes in accordance with a second embodiment of the invention;
Fig. 7 illustrates multiple groups of clipping planes in multiple floors;
Fig. 8 illustrates multiple groups of clipping planes serving several regions of vertical propagation;
Fig. 9 illustrates application of a clipping plane group;
Figs. 10A-10P illustrate adaptive switching of building elements;
Figs. 11A-11G are exploded views illustrating automatic perspective changing;
Fig. 12 illustrates rising arrow indicators of vertical propagation;
Fig. 13 illustrates use of arrows with smoke-texture as indicators;
Fig. 14 illustrates use of growing and swirling arrows as indicators; and
Fig. 15 illustrates a system which embodies the invention.

### DETAILED DESCRIPTION

While embodiments of this invention can take many different forms, specific embodiments thereof are shown in the drawings and will be described herein in detail with the understanding that the present disclosure is to be considered as an exemplification of the principles of the invention, as well as the best mode of practicing same, and is not intended to limit the invention to the specific embodiment illustrated.

In one aspect of the invention, a user could efficiently get basic and accurate information as to smoke such as propagation path, height, density and approximate temperature. In another aspect of the invention, a user could locate a certain area or room of interest when smoke propagates to it. In this instance, the user is able to visualize smoke propagation with no compensation of other building elements. In yet another aspect of the invention, the user can maintain clarity of the building elements and spatial orientation when smoke propagates through multiple floors.

In another aspect of the invention, the user could be aware when smoke propagates vertically. The user could identify the specific location where smoke propagates vertically and get detailed information of vertical propagation such as propagation speed, density, and destination. Embodiments of the invention can incorporate one or more methods which enable users to observe smoke propagation within multiple floors in a three dimensional model of a building.

In one method, a slide bar can be used to alternate visualization focus. This method, in a disclosed embodiment incorporates three slide bars to alternate and balance the visualization focus of smoke and building elements. The user manually alternates the visual strength of smoke and building elements separately or consistently. When users want to check the information of smoke, they can turn up the visual strength of smoke and turn down the visual strength of building elements. When users want to locate smoke in certain area of the building model, they can turn up the visual strength of building elements.

Alternately, adaptive clipping planes can be used to eliminate unnecessary building elements. This method applies manually-operated clipping planes to let users eliminate relatively less important information. They are able to visualize the important information more easily and clearly. When users choose a location of interest, they can generate an initial point centered to setup the center of a group of 4 clipping planes. They can adjust the precise position of each clipping plane making sure that the view has eliminated enough elements to avoid cluttering and occlusion while keeping necessary information remains. Users can keep track of the horizontal propagation of smoke by adjusting clipping planes with it. In yet another aspect of the invention, when the system detects vertical propagation of smoke, it automatically generates an initial center and groups of clipping planes.

Another aspect of the invention incorporates adaptive switching of building elements between 2D and 3D. In this method, most building elements can be illustrated as landmarks or two dimensional floor plans in the three dimensional environment. When the smoke propagation reaches one area, the building elements in this area will rise up as three dimensional objects accordingly. When smoke stops propagating in this area, the building elements will switch from three dimensional objects to two dimensional floor plan or landmarks. When displaying as two dimensional floor plan or landmarks, building elements cause much less occlusion issues. By retaining the area in which smoke is not propagating in as a two dimensional floor plan or landmarks, users can get clear information of smoke propagation more easily while not losing the understanding of the whole building.

Another method incorporates an exploded view with perspective alternation and an indicator for vertical propagation of smoke. In this method an exploded view can be used not only to reduce occlusion and cluttering issues, but also to emphasize vertical propagation. An exploded view enlarges the distance of vertical propagation. Users can observe the vertical propagation more clearly and precisely. Furthermore, to maximally separate two floors the system can automatically adjust perspective of the camera. Using smaller perspective can remarkably reduce occlusion and enable the users to view smoke propagation in multiple floors. Several visual aids can be incorporated as indicators of vertical propagation to ensure the accuracy of visualization of vertical propagation. Arrows, icons or vectors can be used as indicators of vertical propagation catching users' attention and making the source and destination of vertical propagation more easily to locate.

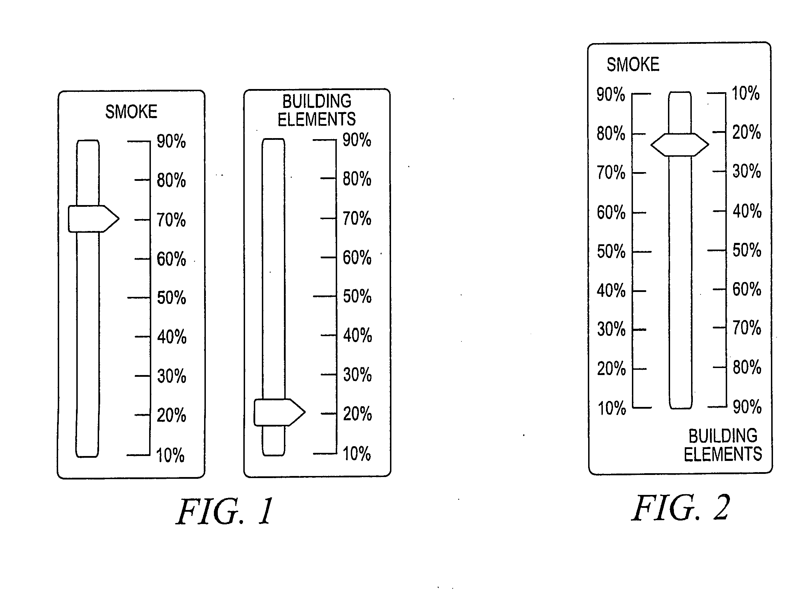

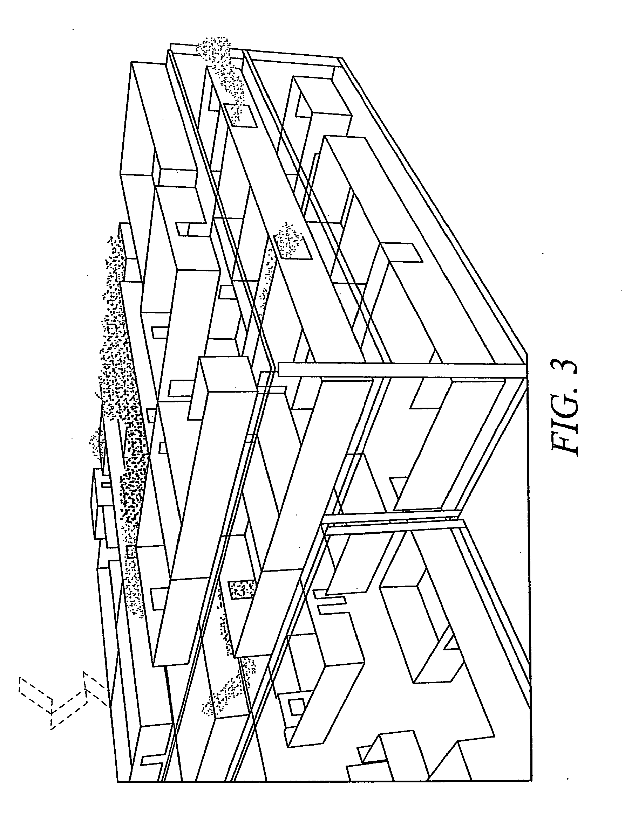

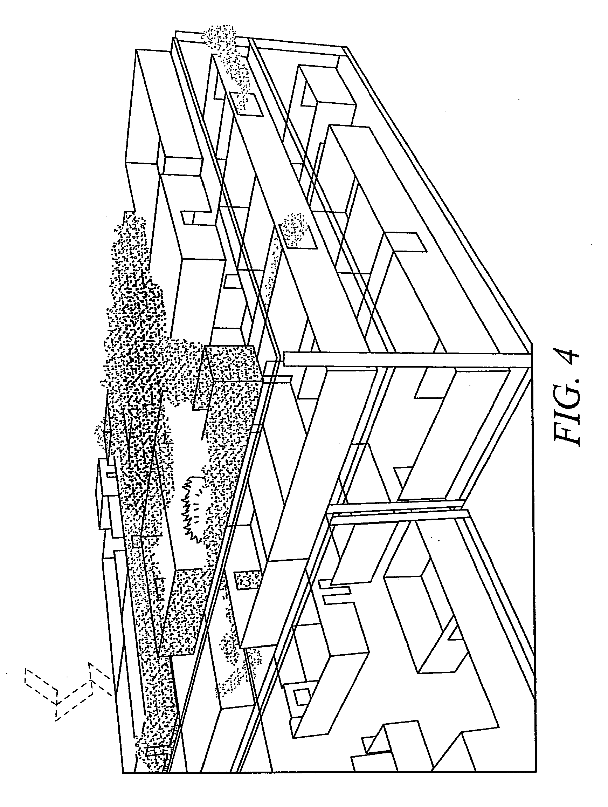

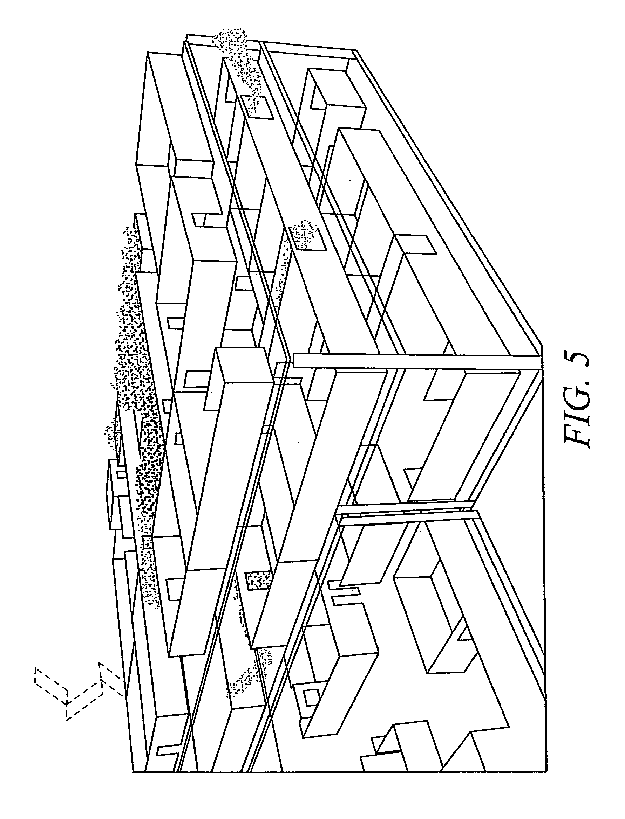

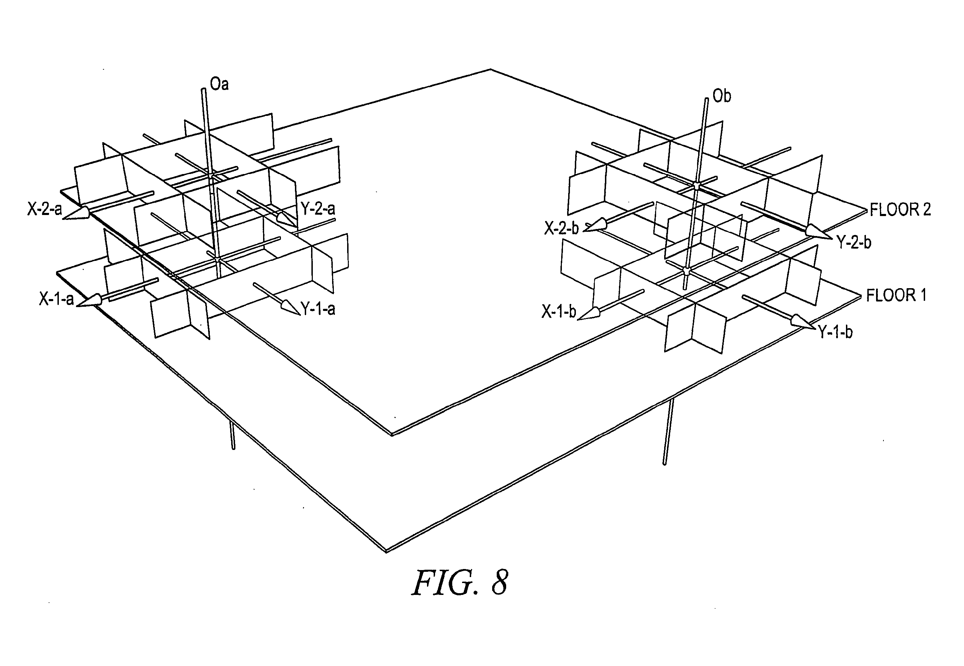

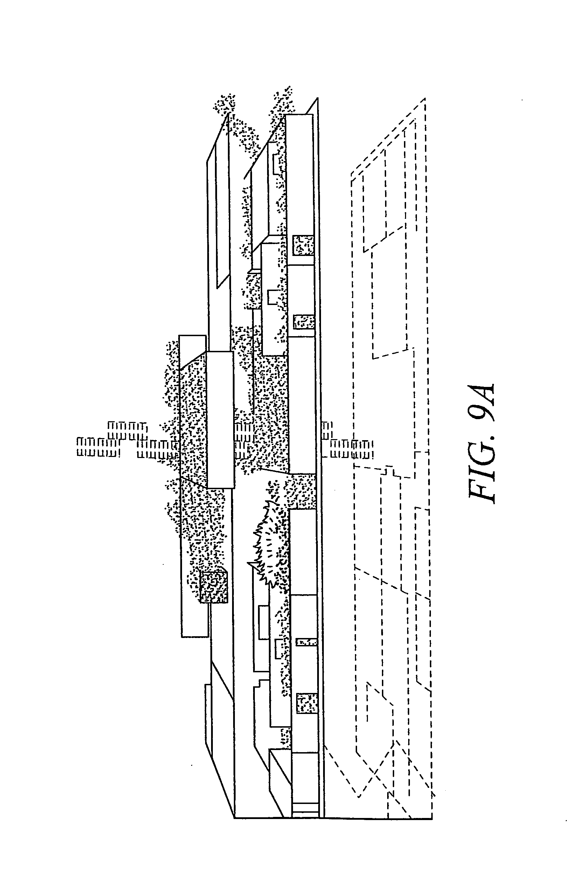

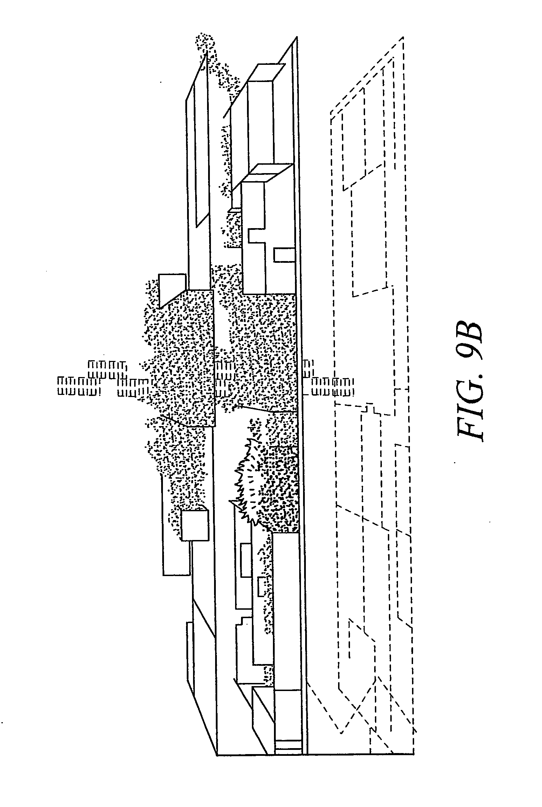

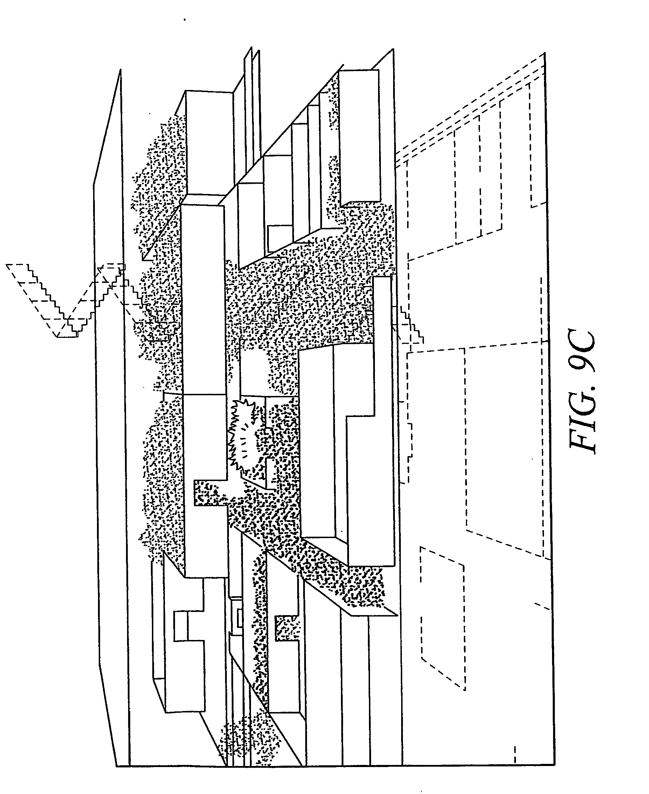

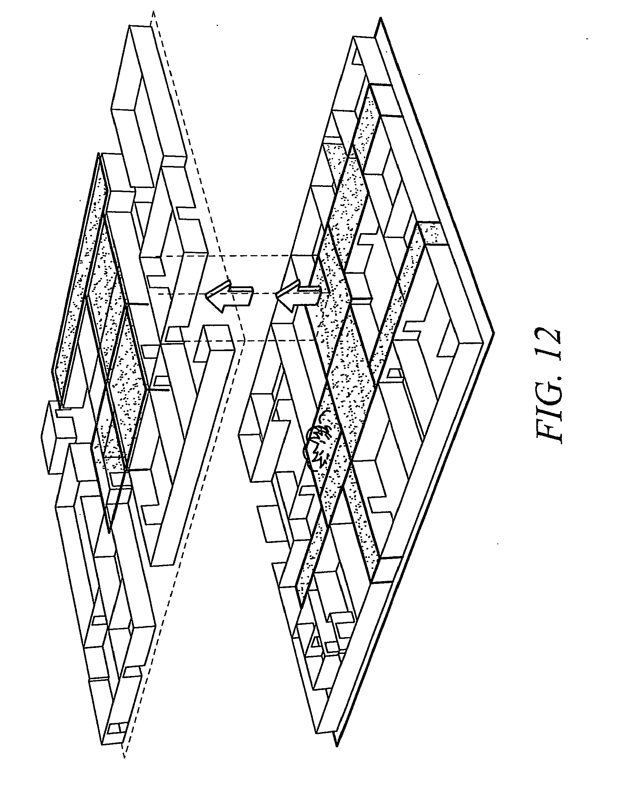

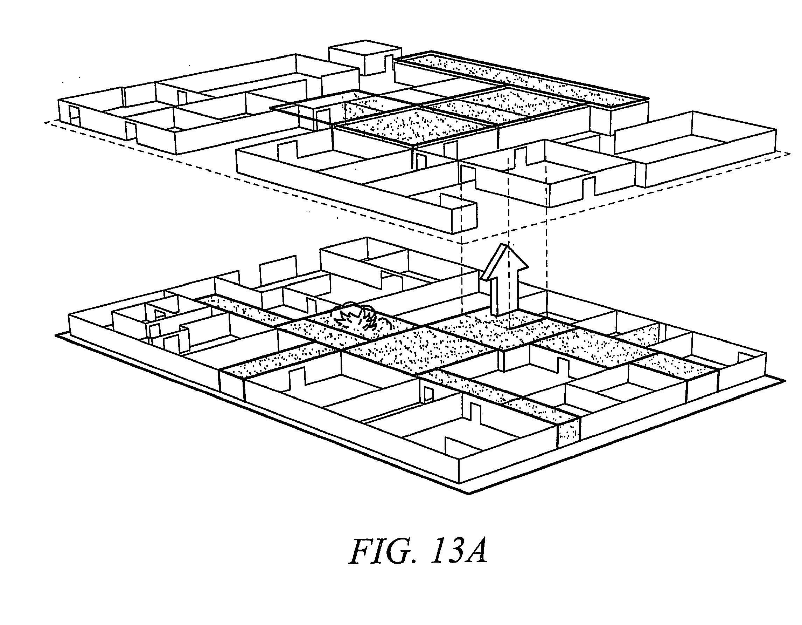

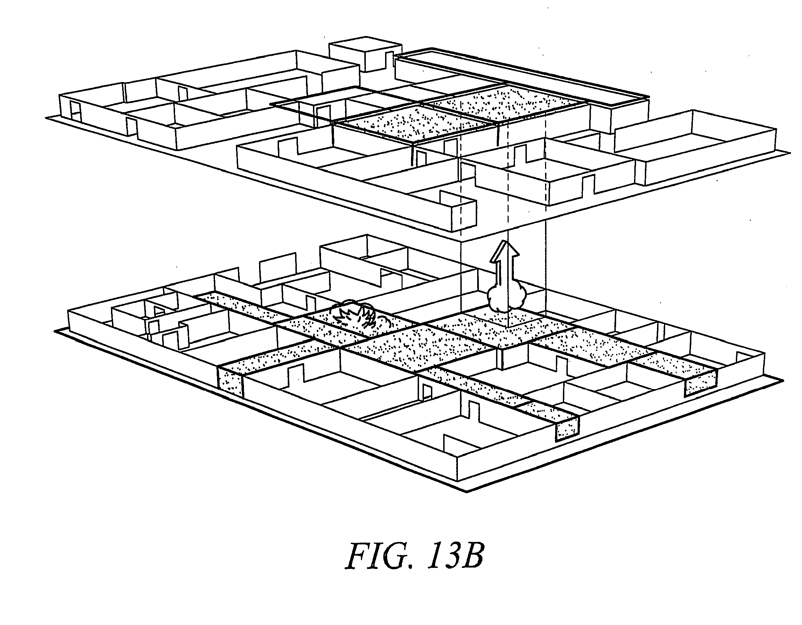

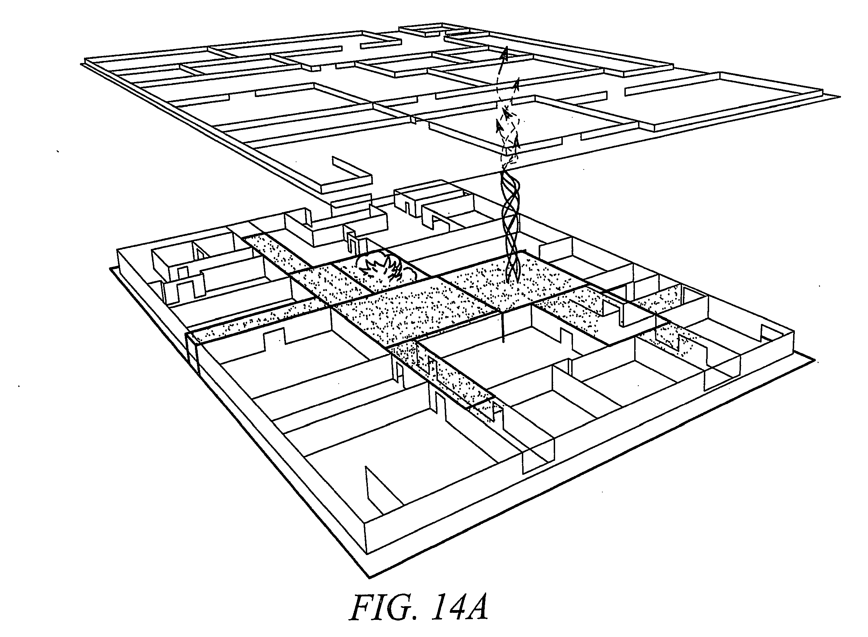

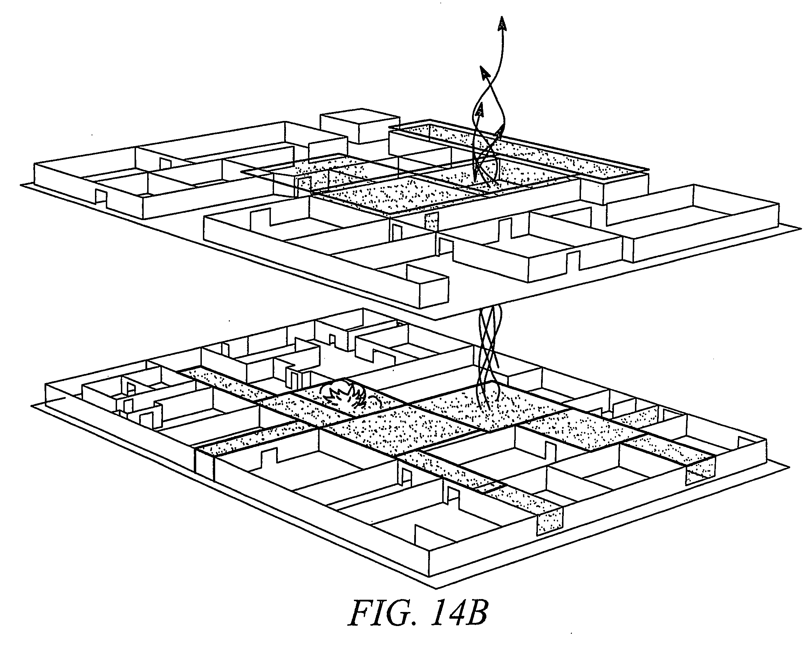

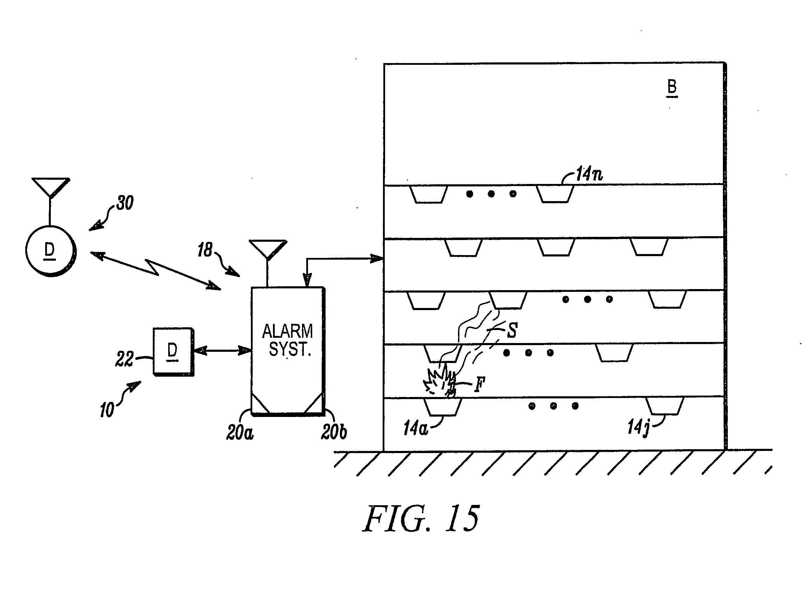

Various embodiments of the invention are described subsequently in combination with associated Figs. 1-15. Fig. 15 illustrates a system 10 in accordance with the invention. For exemplary purposes, system 10 is illustrated installed, in part, to monitor an ambient condition, such as smoke, in a building B. A plurality of smoke detectors, such as 14a, 14b...14j..14n can be installed in the building B and coupled, wired or wirelessly to an alarm system monitoring unit 18.

Unit 18 can include one or more programmable processors 20a which execute software 20b stored on a computer readable medium, such as a disk drive or in a semiconductor memory unit. Unit 18 can also be coupled to a display unit D, illustrated generally at 22. As explained subsequently, in accordance with the invention, as the alarm system 18 is responding, via detectors 14i to a flow of smoke S from a fire F display 22 can present a dynamically changing set of images of progress of the smoke S from floor to floor in building B.

Advantageously, the system 18 can be in wireless communication, for example via a cellular-type provider or the internet with one or more displaced units, such as unit 30. Unit 30 which could be implemented as a wirelessly enabled personal computer or the like, with a display D1 could be located in one or more first responder vehicles. Hence, the fire chief, coming to the scene of a fire at building B could see even before arriving at the developing status of the fire F and associated smoke S.

Those of skill will understand that the following described processes could be implemented as software 20b executed in one or more of the processors 20a. Further, it will be understood that none of the specific hardware or software details of the units 18 and 30 are limitations of the invention, except as described herein.

Relative to Figs. 1-5, a method 100 incorporates three slide bars, presented to the user on display 22 for example, to alternate and balance the visualization focus of smoke and building elements. The alteration and balance by the slide bar is used to manipulate visual strength of smoke and building elements in a single floor as well as the whole scene. The first slide bar is to alternate strength of smoke visualization. The second slide bar is to alternate strength of building elements. And the third slide bar is to alternate visual strength of both smoke and building elements visualization, and there is an opposite relation between smoke visualization and building elements visualization when using the third slide bar.

The parameters of smoke visualization are number of particles in certain space (Pn), life of particle in certain space (Pl), size of a single particle (Ps), opacity of particles (Po) and RGB color of map of particles (Pr, Pg, Pb). When the parameter value goes up, the strength of smoke visualization goes up. The formula is:

A (Value of the smoke strength slide bar) = f (Pl, Ps, Pn, Po, Pr, Pg, Pb)

When the smoke strength slide bar moves up, parameters of smoke visualization go up and the smoke visualization is getting stronger. At this moment, user could get relatively clear, precise and more realistic vision of smoke propagation and other information about smoke.

The parameters of building elements visualization are floor opacity (Fo), Wall opacity (Wo) and opacity of Other elements (Oo). When the parameters value goes up, the strength of building elements visualization goes up. Vice versa.

The formula is:

B (Value of the building elements slide bar) = f (Fo, Wo, Oo)

When the building elements slide bar moves up, parameters of the building elements visualization go up and the building elements visualization is getting stronger. At this moment, user could get a vision of the building and be clear about the three dimensional environment.

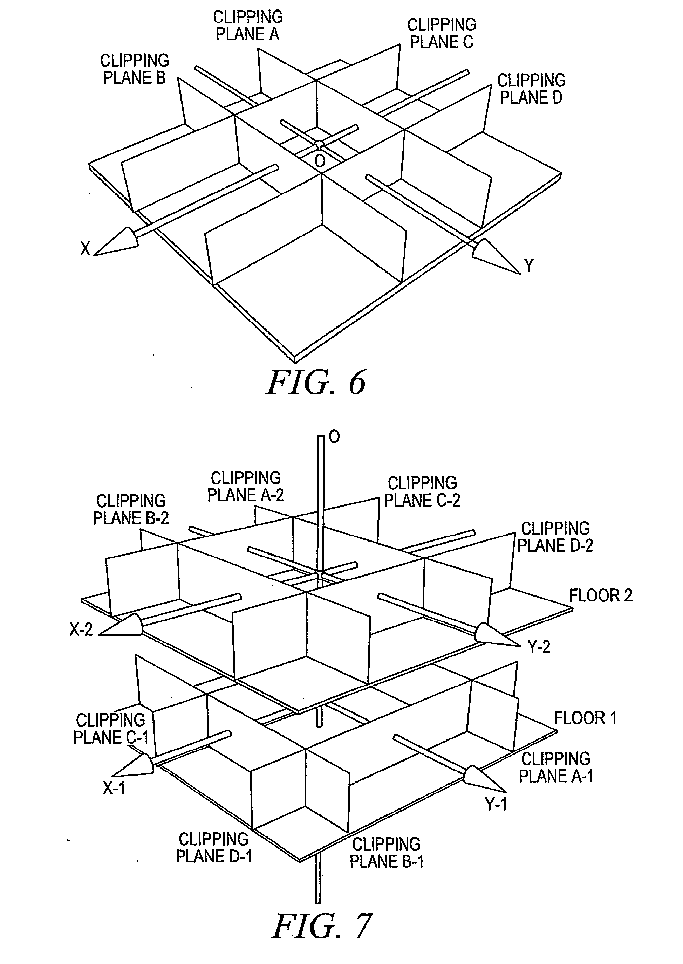

Relative to Figs. 6-9 and a method 200, when smoke starts to propagate vertically, system automatically forms a coordinate based on the specific spot. The geometric centre of this spot will be defined as initial point. Users can also generate an initial center manually. And X axis and Y axis are formed with 90 degree angle crossing this initial point. Clipping plane A will be able to move from O to -X direction and visualization elements behind clipping plane A will be eliminated. Clipping plane B will be able to move from O to +X direction and visualization elements in front of clipping plane B will be eliminated. Clipping plane C will be able to move from O to -Y direction and visualization elements behind clipping plane C will be eliminated. Clipping plane D will be able to move from O to +Y direction and visualization elements in front of clipping plane D will be eliminated.

A user can move the clipping planes manually through the X axis and Y axis based on information on which direction they would like to eliminate. And the value of the movement is based on how much visualization information they want to eliminate to ensure visualization efficiency as well as occlusion reduction.

With multiple floors, users can use separate sets of clipping planes to cut away the floors individually. The initial point O becomes initial axis O, the axis X becomes axis X-1 and X-2, the axis Y becomes axis Y-1 and Y-2.

Multiple groups of clipping planes resist in a single floor as well as the same spot of multiple floors. When multiple vertical propagation occurs, there appears multiple groups of clipping planes. As one initial axis is Oa, another initial axis will be Ob, Oc and so on. Centered with initial axis Oa, there are axis X-1-a, X-2-a, Y-1-a and Y-2-a. It's the same with initial axis Ob, Oc and Od. Only the area inside the four clipping planes in the same group shows up while elements outside the clipping plane are eliminated.

Color-coding is used to differentiate different floors and groups of clipping planes.

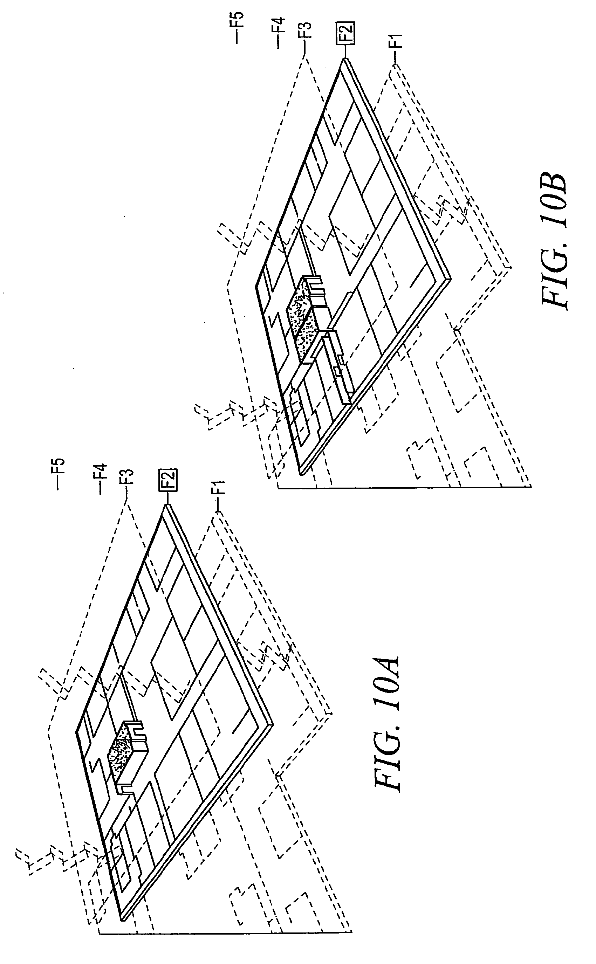

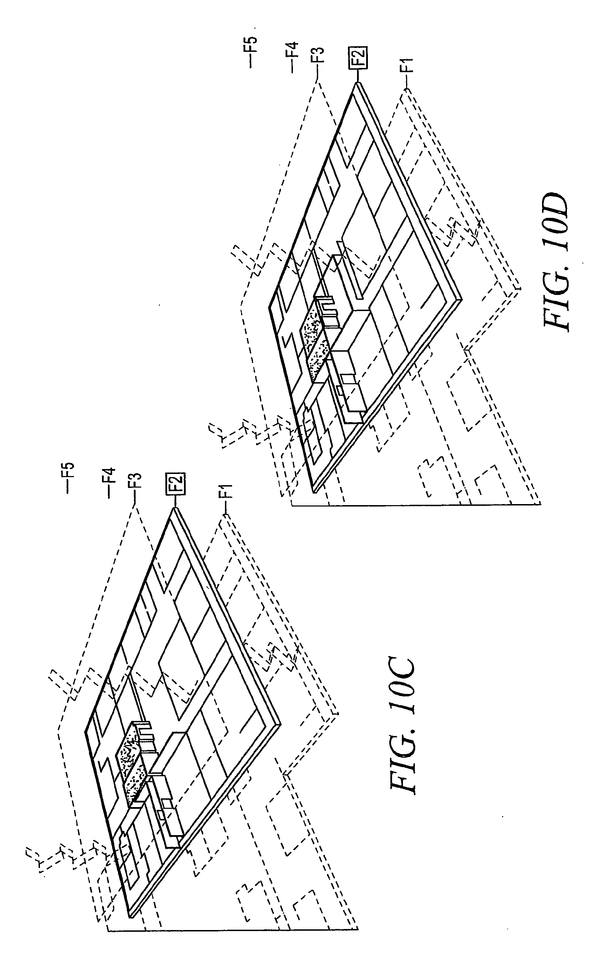

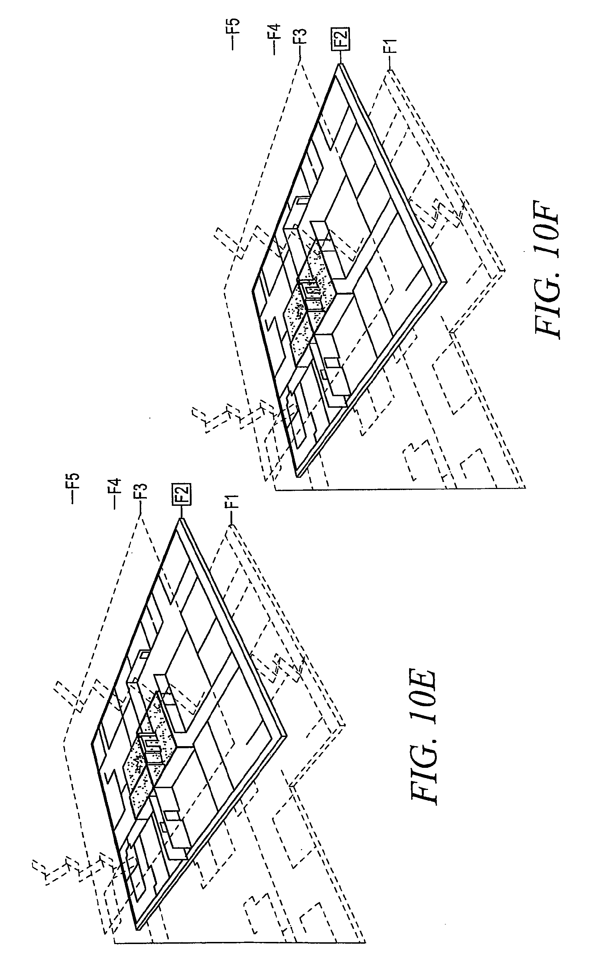

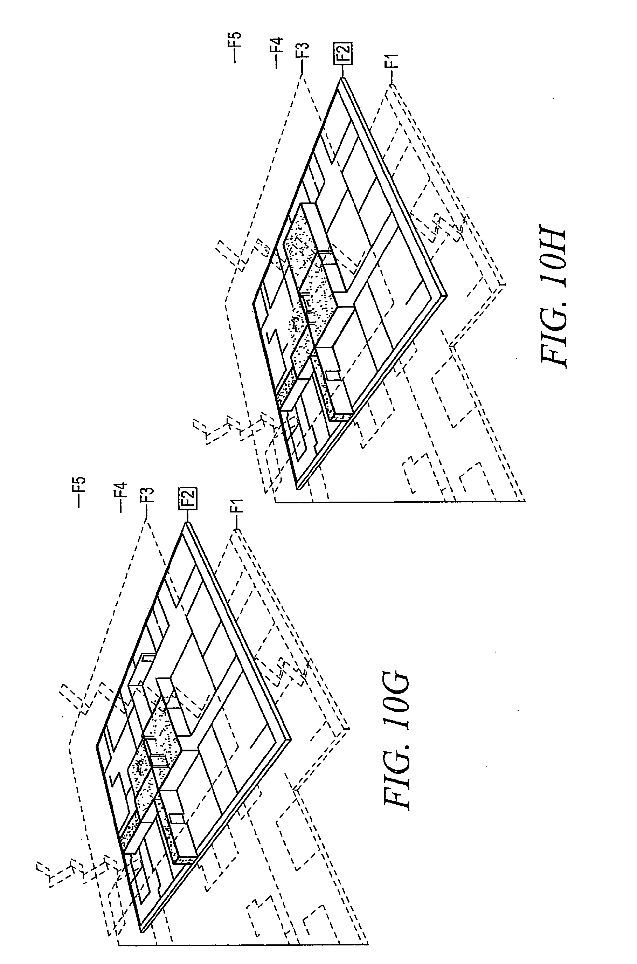

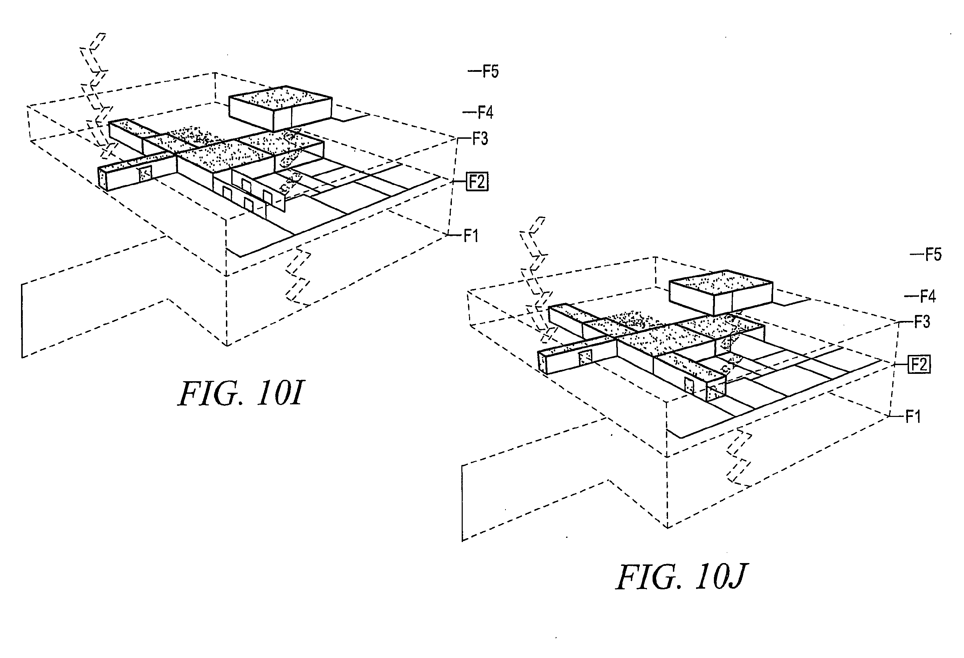

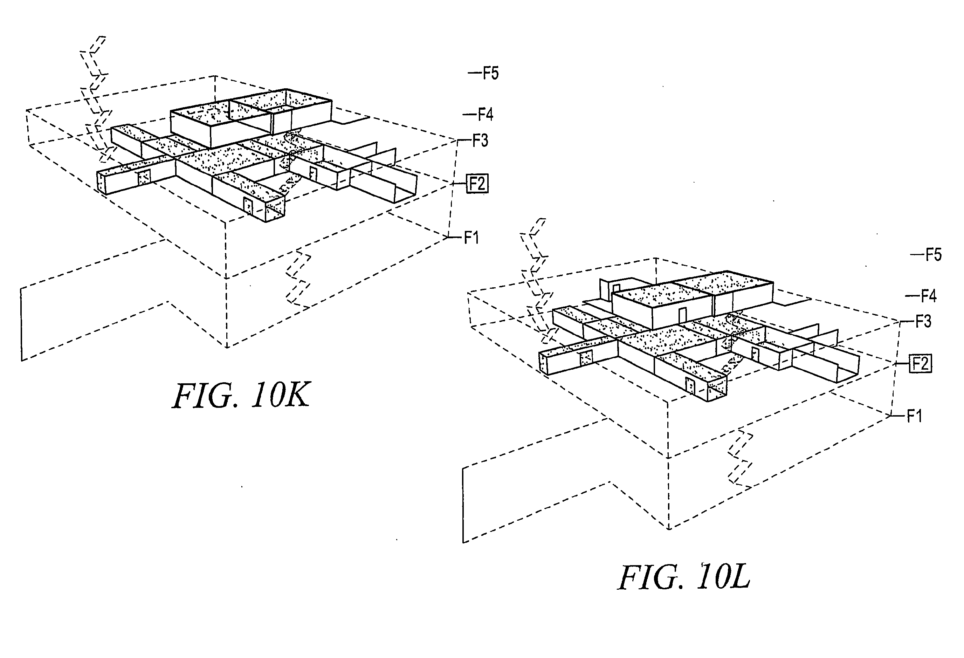

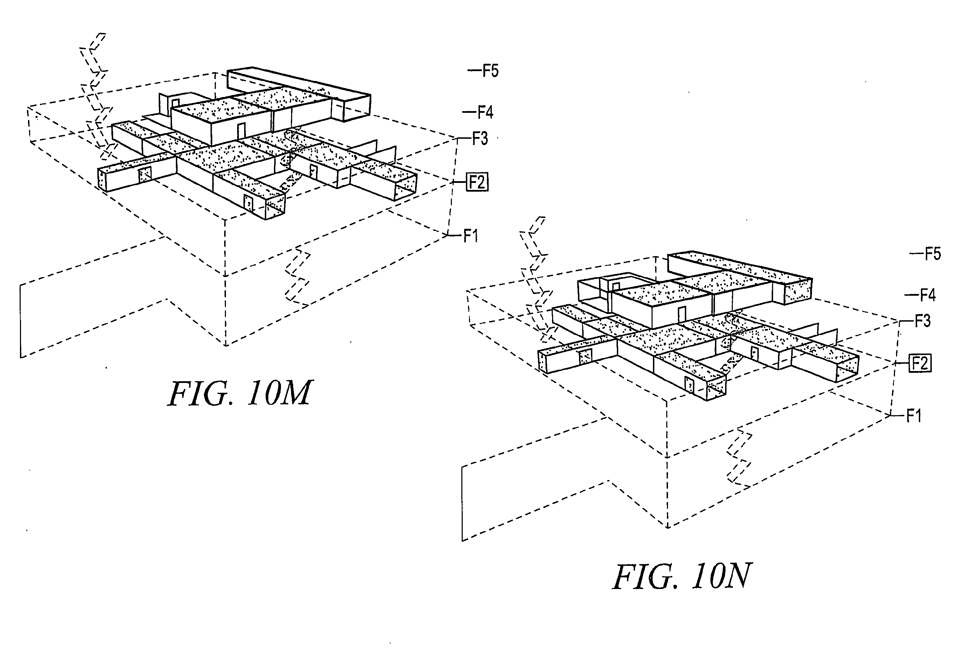

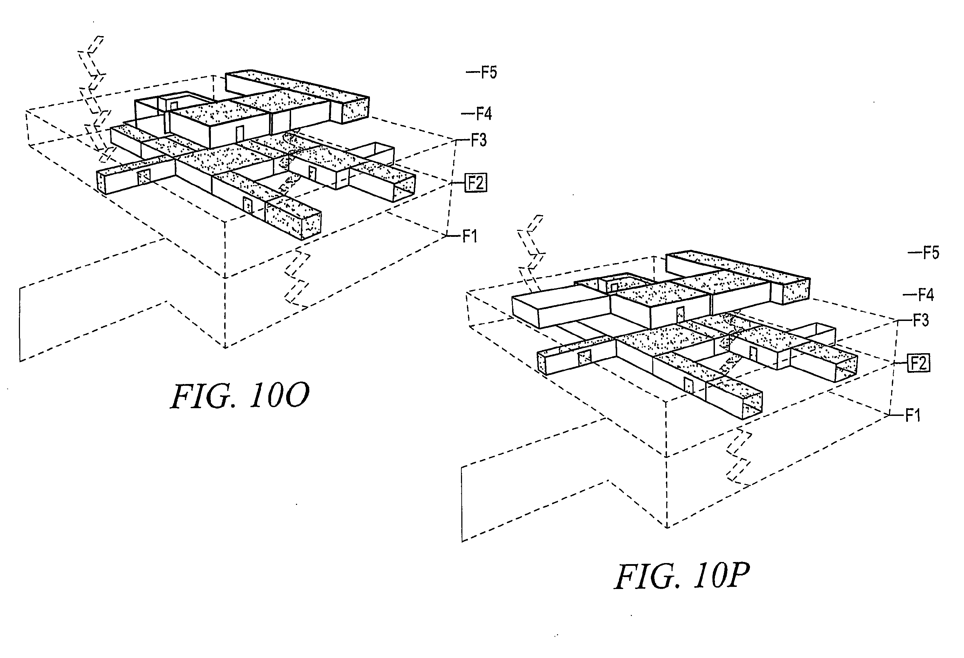

Relative to Fig. 10, two fidelity modes of building elements visualization apply in connection with a method 300. One is the low fidelity in which the building elements are simplified or even shown as two-dimensional floor plan. The other mode is the high fidelity in which the building elements are shown as three dimensional solid with details. These two modes transform into each other by scaling vertically in certain conditions. There is animation for the transformation that makes it look like the low fidelity mode rises up and forms up as the high fidelity mode so that users do not feel confused about the transformation.

The building model is divided into sub-areas, and each area has its elements. For two adjacent areas, there are elements that they share, such as walls or doors. Building elements are shown in low visual fidelity when no smoke propagation occurs. When smoke propagates near an area, the system detects the approach of the propagating smoke and building elements such as building walls and building pillars are automatically switched into high visual fidelity. And other places where no smoke propagates remain at low visual fidelity to avoid occlusion and cluttering.

Once the system detects that no smoke propagation is occurring in an area, building elements in this area will go down to low fidelity visualization mode.

Building elements in different floors are dynamically color-coded to avoid confusion.

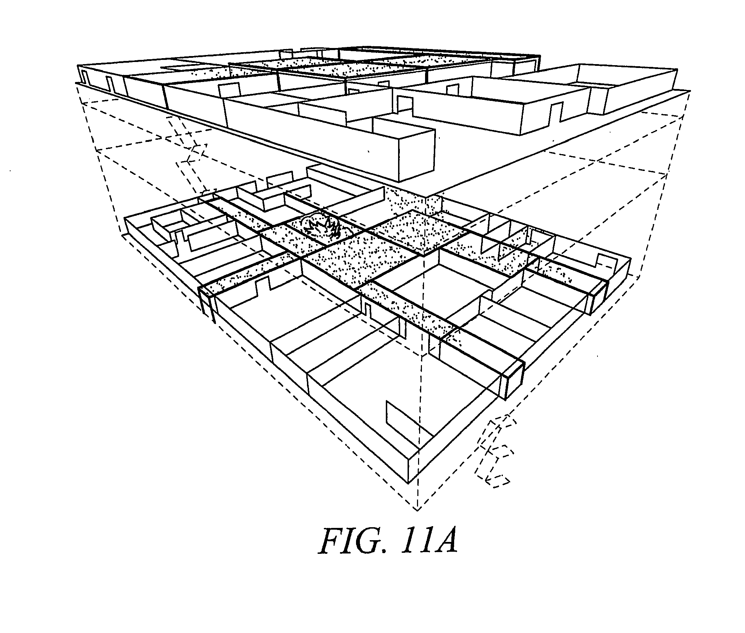

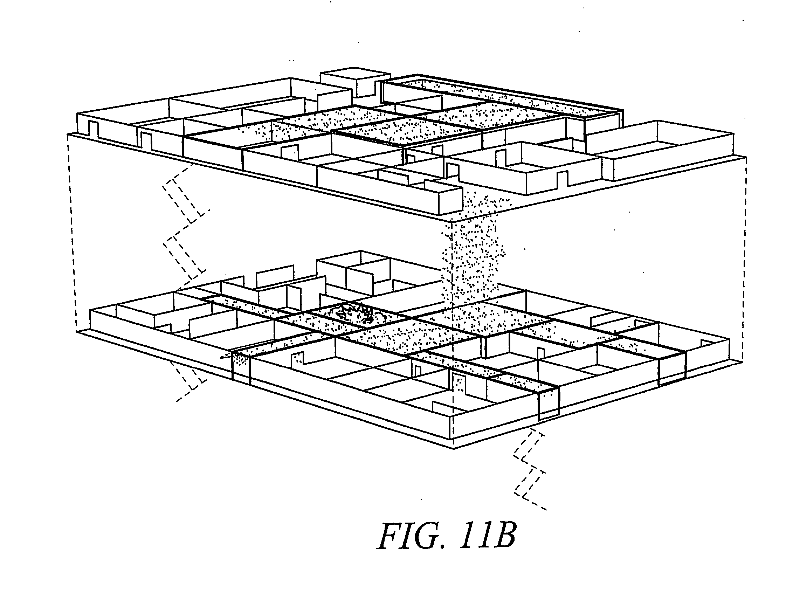

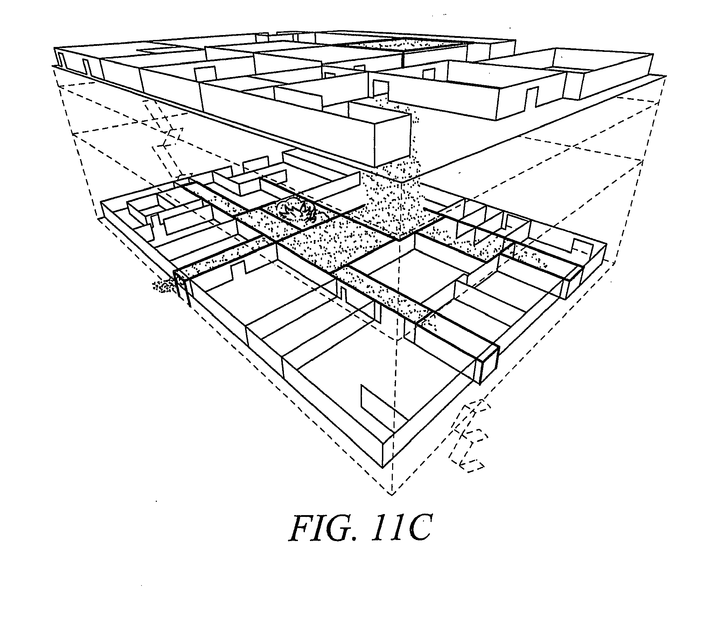

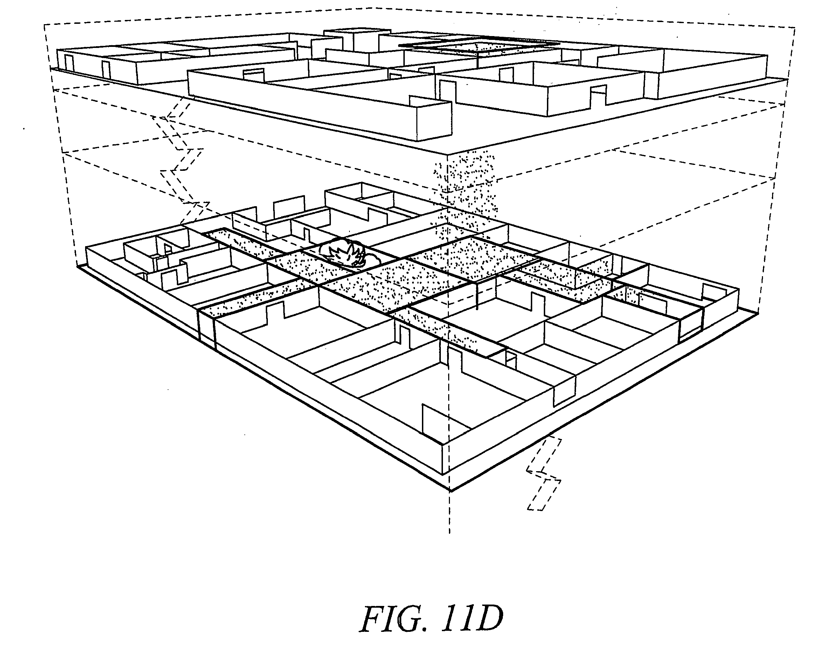

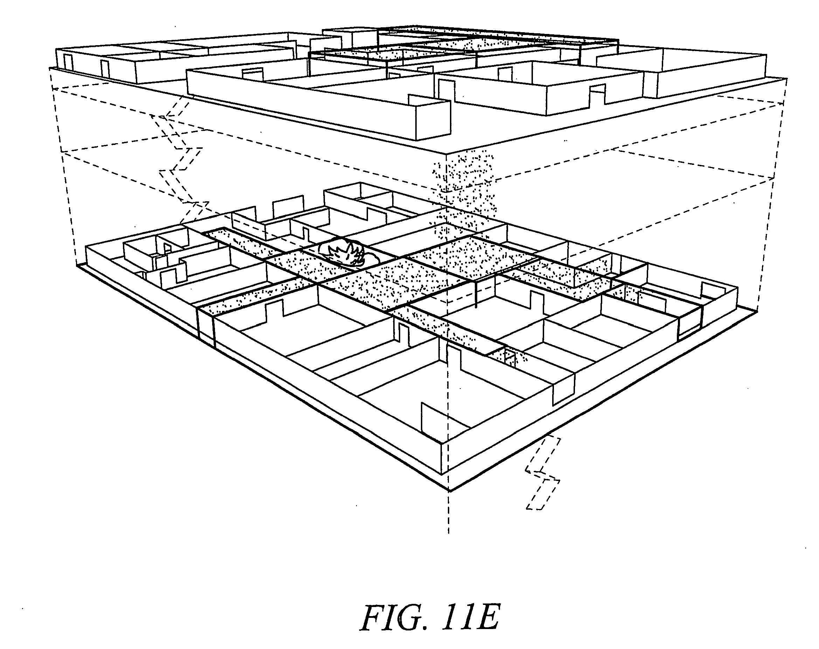

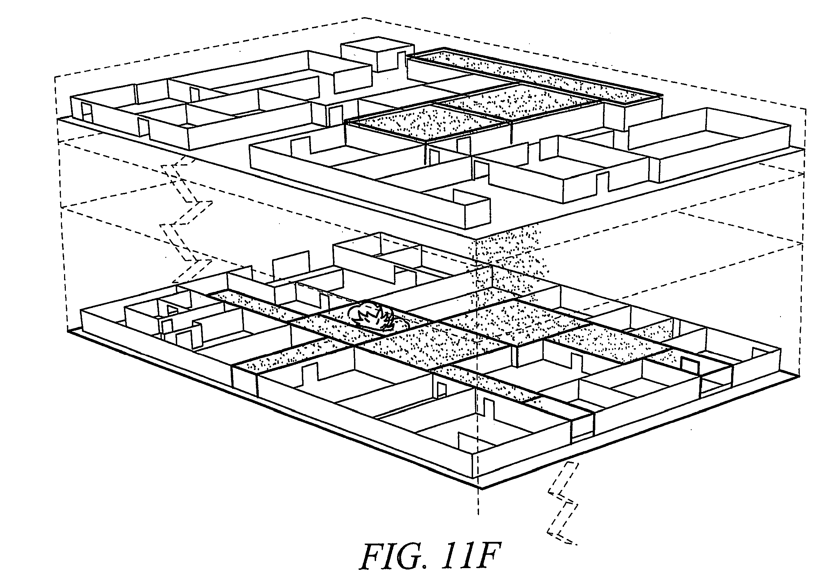

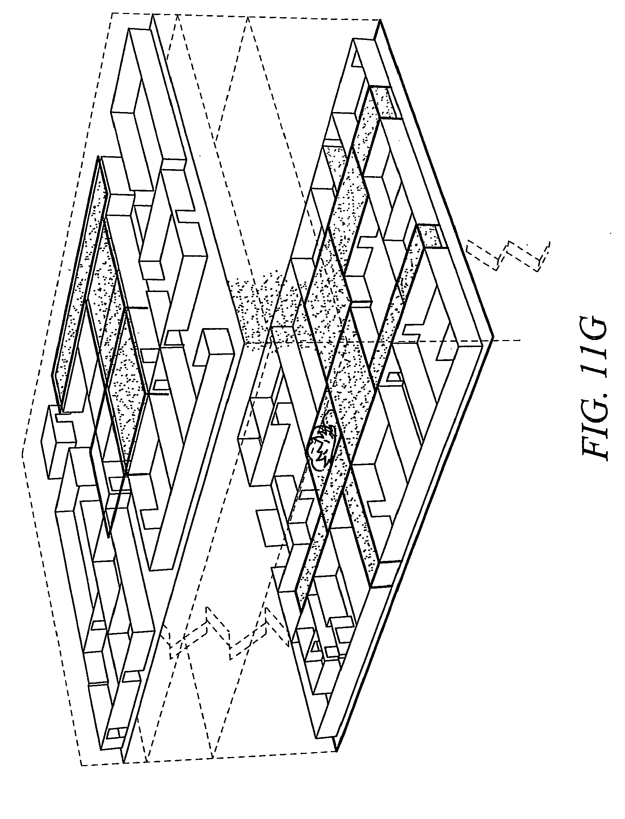

Relative to Figs. 11-14, and a method 400, when smoke propagates in one floor, other floors remain semi-transparent. When system detects a vertical propagation and smoke starts to propagate to neighbor floors, the system automatically enlarges the distance of floors. The enlarged distance is determined by the total size of the floor plan. The formula is:
H is the enlarged height of the exploded view (mm),
h is the original height between two floors (mm),
l is the length of the vertical propagation area (mm), and
w is the width of the vertical propagation area (mm).
There is a positive relation between H and h, l, w.

To further avoid occlusion caused by the building elements, the system automatically decreases the perspective of the shooting camera. This is done by moving the camera farther away from the building model while increasing the focal length and decreasing the shooting angle. The formula is:
P =f (FL, FOV, x, y, z)
P is the amount of perspective of camera,
FL is focal length of the camera (mm),
FOV is the field of view of the camera (degree), and
x, y, z are the three dimensional position of the camera (mm).

There is a negative relation between FL and P. When FL is getting larger, the perspective of the camera view is getting smaller. Meanwhile, the size of the visualized elements, including smoke and building, is getting smaller. So it is necessary to adjust FOV and x, y, z to maintain the size and position of the visualization elements and to ensure relatively spatial consistency.

As the distance of vertical propagation is increasing accordingly, to avoid ambiguity of vertical propagation, we add several visual aids as indicators of vertical propagation to ensure the accuracy of visualization of vertical propagation. The visual aids can be semi-transparent arrows, icons or growing vectors. These methods indicate the vertical propagation by catching attention of the users and visualizing the detailed information about where the vertical propagation stated and ended.

The visualization indicator of smoke vertical propagation can be semi-transparent arrows that constantly moving upwards.

The visualization indicator of smoke vertical propagation can be 3D objects that mapped with smoke-like texture or 2D icons with smoke texture.

Growing and swirling vector-arrows can vividly mimic the vertical propagation of smoke and show more detailed information about how strong the vertical propagation occur.

## Claims

1. A method of displaying smoke propagation in a building comprising:
sensing smoke conditions in a predetermined, multi-floor region of the building via communication with a plurality of smoke detectors (14) disposed throughout the building;
establishing the presence of a developing fire condition;
dynamically responding to the sensed smoke conditions within the multi-floor region of the building to present at a location remote from the building, on at least one selected display unit (30) a three-dimensional representation of the multi-floor region of the building including a graphical representation of the sensed smoke conditions and graphical representations of building elements;
wherein balance of visualization focus between the graphical representation of the sensed smoke conditions and the graphical representations of building elements is adjustable via at least one display unit slide bar.

2. A method as in claim 1, wherein the at least one display unit slide bar allows a user to adaptively eliminate unnecessary building elements, switch the graphical representations of building elements between two dimensional and three dimensional representations, or, provide an exploded view with perspective alteration and an indicator of direction of smoke propagation.

3. A method as in claim 1 further including a second slide bar to independently adjust smoke and building element visual strength.

4. A method as in claim 1 which includes displaying at least two different, adjacent floors of the multi-floor region and independently adjusting the smoke and building element visual strength therein.

5. A method as in claim 1 that includes creating a set of clipping planes centered on the location of sensing the smoke condition.

6. A method as in claim 5 which includes manually adjusting at least one of the clipping planes.

7. A method as in claim 6 which includes responding to horizontal propagation of smoke by adjusting the clipping planes.

8. A method as in claim 1 including generating a display of some building elements in a two dimensional format in the absence of smoke in the associated area, and, responsive to smoke propagation into the area, converting the building elements from two dimensional representations into three dimensional representations.

9. A method as in claim 8 where a two dimensional representation is gradually and visually transitioned into a three dimensional representation maintaining user spatial orientation.

10. A method as in claim 8 which includes, when smoke ceases propagating into the area, converting at least some of the three dimensional representations back into two dimensional representations.

11. A method as in claim 1 including providing an exploded view with perspective alteration and an indicator of direction of smoke propagation.

12. A method as in claim 11 which includes providing an indicator of propagation of smoke between floors of the region.

13. A method as in claim 12 where providing an indicator includes providing at least one of arrows, icons or vectors as indicators of vertical propagation between floors.

14. A smoke display apparatus comprising:
a plurality of smoke detectors disposed throughout a multi-floor building;
control circuitry coupled to the detectors to respond to electrical signals indicative of the presence of smoke in the vicinity of at least some of the detectors;
circuitry to dynamically respond to sensed smoke conditions to present, on at least one selected display unit (30), a three-dimensional representation of the multi-floor building including a graphical representation of the sensed smoke conditions and graphical representations of building elements; and
a display unit slide bar adapted to adjust balance of visualization focus between the graphical representation of the sensed smoke conditions and the graphical representations of building elements.

## Patentansprüche

1. Verfahren zum Anzeigen von Rauchausbreitung in einem Gebäude, das Folgendes umfasst:
Erfassen von Rauchbedingungen in einem vorgegebenen, mehrstöckigen Bereich des Gebäudes über die Kommunikation mit mehreren Rauchdetektoren (14), die überall im Gebäude angeordnet sind;
Nachweisen des Vorliegens der Bedingung eines entstehenden Brandes;
dynamisches Reagieren auf die erfassten Rauchbedingungen in dem mehrstöckigen Bereich des Gebäudes, um an einem von dem Gebäude entfernten Ort auf mindestens einer ausgewählten Anzeigeeinheit (30) eine dreidimensionale Darstellung des mehrstöckigen Bereichs des Gebäudes darzustellen, die eine graphische Darstellung der erfassten Rauchbedingungen und graphische Darstellungen der Gebäudeelemente enthalten;
wobei das Gleichgewicht des Veranschaulichungsschwerpunkts zwischen der graphischen Darstellung der erfassten Rauchbedingungen und den graphischen Darstellungen der Gebäudeelemente über mindestens einen Anzeigeeinheitschieber einstellbar ist.

2. Verfahren nach Anspruch 1, wobei der Anzeigeeinheitschieber einem Anwender erlaubt, nicht erforderliche Gebäudeelemente adaptiv zu entfernen, die graphischen Darstellungen von Gebäudeelementen zwischen zweidimensionalen und dreidimensionalen Darstellungen umzuschalten oder ein Explosionsbild mit perspektivischer Änderung und eine Anzeige der Richtung der Rauchausbreitung zu erstellen.

3. Verfahren nach Anspruch 1, das ferner einen zweiten Schieber enthält, um die visuelle Stärke von Rauch und Gebäudeteil unabhängig voneinander anzupassen.

4. Verfahren nach Anspruch 1, das das Anzeigen von mindestens zwei verschiedenen, benachbarten Stockwerken des mehrstöckigen Bereichs und das unabhängige Anpassen der visuellen Stärke von Rauch und Gebäudeteil darin enthält.

5. Verfahren nach Anspruch 1, das das Erzeugen einer Menge von Schnittebenen, die um den Ort des Erfassens der Rauchbedingung zentriert sind, enthält.

6. Verfahren nach Anspruch 5, das das manuelle Anpassen mindestens einer der Schnittebenen enthält.

7. Verfahren nach Anspruch 6, das das Reagieren auf horizontale Rauchausbreitung durch Anpassen der Schnittebenen enthält.

8. Verfahren nach Anspruch 1, das das Erzeugen einer Anzeige einiger Gebäudeelemente in einem zweidimensionalen Format, wenn in dem zugehörigen Gebiet kein Rauch vorhanden ist, und in Reaktion auf Rauchausbreitung in das Gebiet das Umwandeln der Gebäudeelemente von zweidimensionalen Darstellungen in dreidimensionale Darstellungen enthält.

9. Verfahren nach Anspruch 8, wobei ein schrittweiser und visueller Übergang von einer zweidimensionalen Darstellung in eine dreidimensionale Darstellung erfolgt, wobei die räumliche Orientierung des Anwenders erhalten bleibt.

10. Verfahren nach Anspruch 8, das dann, wenn der Rauch aufhört, sich in diesen Bereich auszubreiten, das Umwandeln zumindest einiger der dreidimensionalen Darstellungen zurück in zweidimensionale Darstellungen enthält.

11. Verfahren nach Anspruch 1, das das Erstellen eines Explosionsbildes mit perspektivischer Veränderung und eine Anzeige der Richtung der Rauchentwicklung enthält.

12. Verfahren nach Anspruch 11, das das Erstellen einer Anzeige der Rauchausbreitung zwischen den Stockwerken des Bereiches enthält.

13. Verfahren nach Anspruch 12, wobei das Erstellen einer Anzeige das Erstellen von Pfeilen, Symbolen und/oder Vektoren als Anzeigen für die vertikale Ausbreitung zwischen den Stockwerken enthält.

14. Rauchanzeigevorrichtung, die Folgendes umfasst:
mehrere Rauchdetektoren, die überall in einem mehrstöckigen Gebäude angeordnet sind;
eine Steuerschaltungsanordnung, die mit den Detektoren verbunden ist, um auf elektrische Signale zu reagieren, die die Anwesenheit von Rauch in der Nähe zumindest einiger der Detektoren anzeigen;
eine Schaltungsanordnung, um dynamisch auf die erfassen Rauchbedingungen zu reagieren, um auf mindestens einer ausgewählten Anzeigeeinheit (30) eine dreidimensionale Darstellung des mehrstöckigen Gebäudes darzustellen, die eine graphische Darstellung der erfassten Rauchbedingungen und graphische Darstellungen von Gebäudeelementen enthält; und
einen Anzeigeeinheitschieber, der dafür ausgelegt ist, das Gleichgewicht des Veranschaulichungsschwerpunkts zwischen der graphischen Darstellung der erfassten Rauchbedingungen und den graphischen Darstellungen der Gebäudeelemente einzustellen.

## Revendications

1. Procédé d'affichage de la propagation de fumée dans un bâtiment, le procédé comprenant les étapes consistant à :
détecter des conditions de fumée dans une région sur plusieurs étages prédéfinie du bâtiment par communication avec une pluralité de détecteurs de fumée (14) répartis dans le bâtiment ;
établir la présence d'une condition d'incendie qui se développe ;
répondre dynamiquement aux conditions de fumée détectées au sein de la région sur plusieurs étages du bâtiment pour présenter à un emplacement distant du bâtiment, sur au moins une unité d'affichage sélectionnée (30), une représentation à trois dimensions de la région sur plusieurs étages du bâtiment comportant une représentation graphique des conditions de fumée détectées et des représentations graphiques d'éléments du bâtiment ;
dans lequel l'équilibre de la mise au point de visualisation entre la représentation graphique des conditions de fumée détectées et les représentations graphiques d'éléments du bâtiment est réglable à l'aide d'au moins une barre à curseur d'unité d'affichage.

2. Procédé selon la revendication 1, dans lequel ladite au moins une barre à curseur d'unité d'affichage permet à un utilisateur de supprimer de façon adaptative des éléments superflus du bâtiment, de faire basculer les représentations graphiques d'éléments du bâtiment entre des représentations à deux dimensions et à trois dimensions ou de produire une vue éclatée avec modification de la perspective et un indicateur de direction de propagation de la fumée.

3. Procédé selon la revendication 1, comportant en outre une deuxième barre à curseur permettant de régler indépendamment l'intensité visuelle de la fumée et d'éléments du bâtiment.

4. Procédé selon la revendication 1, comprenant l'étape consistant à afficher au moins deux étages adjacents différents de la région sur plusieurs étages et à y régler indépendamment l'intensité visuelle de la fumée et d'éléments du bâtiment.

5. Procédé selon la revendication 1, comprenant l'étape consistant à créer un jeu de plans de découpage centrés sur l'emplacement de détection de la condition de fumée.

6. Procédé selon la revendication 5, comprenant l'étape consistant à régler manuellement au moins un des plans de découpage.

7. Procédé selon la revendication 6, comprenant l'étape consistant à répondre à une propagation horizontale de fumée en réglant les plans de découpage.

8. Procédé selon la revendication 1, comprenant l'étape consistant à générer un affichage de certains éléments du bâtiment dans un format à deux dimensions en l'absence de fumée dans la zone associée et, en réponse à la propagation de fumée dans la zone, à convertir les éléments du bâtiment de représentations à deux dimensions en représentations à trois dimensions.

9. Procédé selon la revendication 8, dans lequel une représentation à deux dimensions passe progressivement et visuellement à une représentation à trois dimensions conservant l'orientation spatiale d'un utilisateur.

10. Procédé selon la revendication 8, comprenant, lorsque la fumée cesse de se propager dans la zone, l'étape consistant à reconvertir au moins certaines des représentations à trois dimensions en des représentations à deux dimensions.

11. Procédé selon la revendication 1, comprenant l'étape consistant à produire une vue éclatée avec modification de la perspective et un indicateur de direction de propagation de la fumée.

12. Procédé selon la revendication 11, comprenant l'étape consistant à produire un indicateur de propagation de la fumée entre des étages de la région.

13. Procédé selon la revendication 12, dans lequel l'étape consistant à produire un indicateur comprend l'étape consistant à produire des flèches et/ou des icônes et/ou des vecteurs en guise d'indicateurs de propagation verticale entre des étages.

14. Appareil d'affichage de fumée, comprenant :
une pluralité de détecteurs de fumée répartis dans un bâtiment à plusieurs étages ;
une circuiterie de commande couplée aux détecteurs pour répondre à des signaux électriques indiquant la présence de fumée à proximité d'au moins certains des détecteurs ;
une circuiterie pour répondre dynamiquement à des conditions de fumée détectées pour présenter, sur au moins une unité d'affichage sélectionnée (30), une représentation à trois dimensions du bâtiment à plusieurs étages comportant une représentation graphique des conditions de fumée détectées et des représentations graphiques d'éléments du bâtiment ; et
une barre à curseur d'unité d'affichage adaptée à régler l'équilibre de la mise au point de visualisation entre la représentation graphique des conditions de fumée détectées et les représentations graphiques d'éléments du bâtiment.
